Europäisches Patentamt

European Patent Office

Office européen des brevets

(11) Publication number: **0 314 209**
A2

## (12) EUROPEAN PATENT APPLICATION

(21) Application number: 88202145.4

(51) Int. Cl.⁴: **A23G 9/28**

(22) Date of filing: 30.09.88

(30) Priority: 28.10.87 IT 2243487

(43) Date of publication of application:
03.05.89 Bulletin 89/18

(84) Designated Contracting States:
AT BE CH DE ES FR GB GR LI LU NL SE

(71) Applicant: BRAVO S.p.A.
Via Lago di Molveno, 4
I-36100 Vicenza(IT)

(72) Inventor: Bravo, Francesco
Via Parini, 1
I-36075 Montecchio Maggiore Vicenza(IT)

(74) Representative: Martegani, Franco et al
Via Damiano Chiesa, 56
I-20099 Sesto San Giovanni (Milano)(IT)

(54) Icecream dispenser operating with a disposable icecream cartridge.

(57) An icecream dispenser comprises at least a re-
frigerated chamber closed by a hatch or gate featur-
ing a delivery tap, which chamber is adapted to
house in a removable manner an icecream cartridge
containing a quantity of icecream, on which cartridge
there act pressing means able to dispense a dose of
icecream through the aperture of the said delivery
tap. The said pressing means comprise an air chamber housed within the said refrigerated chamber and
featuring a piston-type wall adapted to act on the
base of the said icecream cartridge, the said air
chamber being connected to a source of com-
pressed air external to the refrigerated chamber. The
icecream cartridge consists of a container made of
suitable flexible material.

Fig.2

## ICECREAM DISPENSER OPERATING WITH A DISPOSABLE ICECREAM CARTRIDGE

The present invention relates to improvements to an icecream dispenser operating with a disposable icecream cartridge.

As it well-known to persons with ordinary skill in the art, there are basically two types of icecream: industrial icecream and "hand-made" or Italian-style icecream.

Industrial icecream is prepared and packaged in large quantities and distributed to the different sales-points where the single packs are stored in refrigerators, often for lengthy periods of time.

Industrial icecream therefore has to be prepared with basic ingredients that are long-life, only slightly degradable and with preservatives added to them -these last negatively affecting the quality of the product-which is thus not of the best.

For its distributors, on the other hand, industrial icecream has the advantage of reasonable cost, of not requiring any machines or personnel skilled in its production but simply a refrigerator in which to store the different packs, which take only a minimal time to be distributed.

"Hand-made" or Italian-style icecream is of a quality much higher than that of industrial icecream, but has to be prepared at the place of sale by skilled personnel and using a machine designed for the purpose: it therefore has a high cost.

The variously flavoured icecream is placed into container-vessels and stored, briefly, within freezing counters from which it is taken off for the preparation of cornets and tubs.

An icecream dispenser operating with a disposable icecream cartridge has already been proposed in U.S. Patent 2,559,849. The dispenser forming subject matter of the said U.S. Patent comprises a refrigerated cylindrical chamber adapted to receive a disposable icecream container made of paperboard.

The icrecream is dispensed in doses by means of a piston that sweeps the icecream container.

When all the icecream in it has been used-up, the empty container is removed and replaced by a fresh, filled container.

In a dispenser devised in this manner it is practically impossible to obtain a sufficient seal, requisite for reasons both of function and hygiene, between piston and paperboard container.

It is clear that, as well as exposing the icecream to the surrounding polluted ambience, a poor seal of the kind in question causes a considerable loss od product, which is extruded upstream of the piston.

In addition, a dispenser of the aforesaid type is somewhat bulky inasmuch as the piston requires an actuating cylinder, external to the refrigerated chamber, the bulk dimensions of which are more or less the same as those of this latter.

The object of the present invention is to obviate the aforesaid drawbacks of the known art and, to attain such object, the invention embodies an icecream dispenser of the type comprising at least a refrigerated chamber closed by a hatch or gate featuring a delivery tap, the said chamber being adapted to house in a removable manner an icecream cartridge containing a certain amount of icecream, on which cartridge there act pressing means able to dispense a dose of icecream through the aperture of the said delivery tap, wherein the said pressing means comprise an air chamber housed within the said refrigerated chamber and featuring a piston-type wall adapted to act on the base of the said icecream cartridge, the said air chamber being connected to a compressed air source external to the refrigerated chamber, and wherein the said icecream cartridge comprises a container made of flexible material.

The structural and functional characteristics of the invention and its advantages over the known art will become more apparent from an examination of the following description, referred to the appended diagrammatic drawings which shown an example of a dispenser embodied according to the innovative principles of the invention. In the drawings:

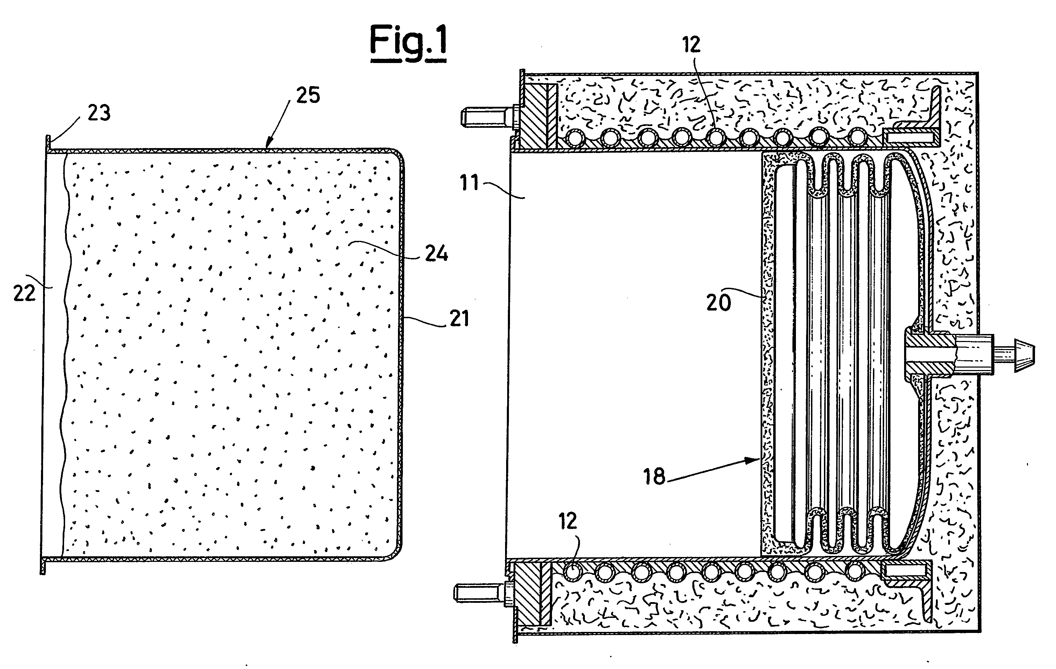

Figure 1 is an enlarged view illustrating the said dispenser; and

Figure 2 is view illustrating the dispenser after assembly, ready for use.

With reference to the drawings, the dispenser in question is indicated overall by 10 and consists structurally of an insulated chamber 11 for example cylindrical in shape, which is suitably cooled by the agency of any known cooling circuit, the coolant circulation coil of which is indicated by 12.

Proximally to a base, the cylindrical chamber 11 is provided with a hatch or gate 13 applied by screws 14 in a removable manner.

The hatch or gate 13 is of the type well-known to persons with ordinary skill in the art and features a tap 15 for delivery of a dose of icecream through an outlet duct 16.

According to the invention, within the said cylindrical chamber 13 and proximally to its base 17 provision is made for a bellows-type air chamber 18 which is connected to a compressed air source, indicated schematically by the arrow 19, outside the chamber 11.

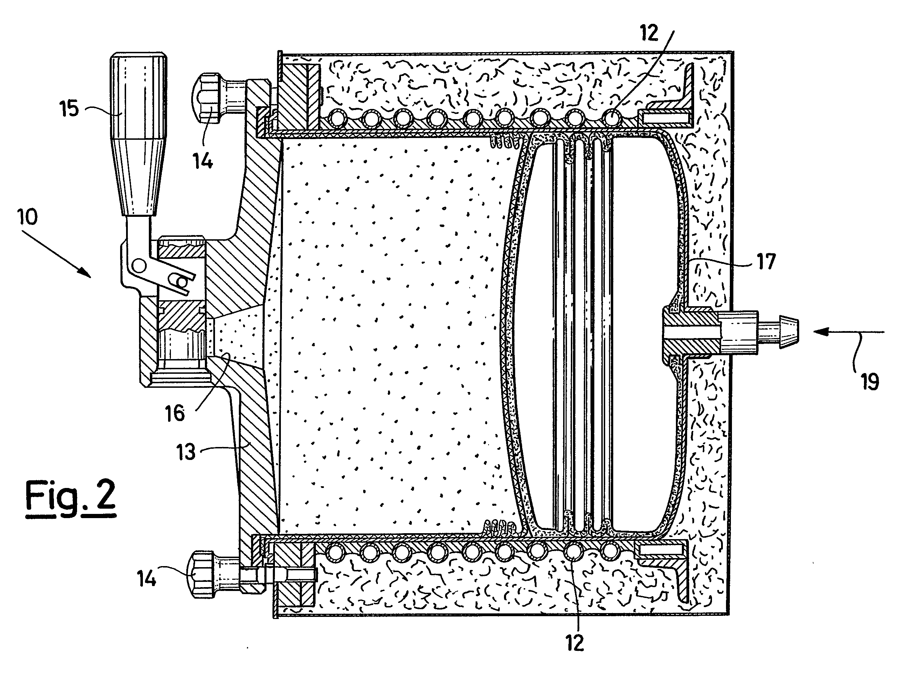

The air chamber 18 has a piston-type wall 20 adapted to press against the base wall 21 of a disposable container 22 made of flexible material, for example plastics material, and provided with an annular flange 23 proximal to the side of said container intended to be opened, onto which flange the gate 13 closes in a tight seal manner, as is shown in Figure 2. The container 22 filled with a quantity of icecream 24 is of course closed by a suitable removable closure (not shown) applied to the flange 23.

The container 22, filled with icecream 24, consitutes an icecream cartridge 25 for loading into the dispenser 10.

The manner of operating of the icecream dispenser according to the invention emerges from the foregoing, and is briefly as follows.

A filled icecream cartridge 25 is introduced into the refrigerated chamber 11, and the chamber 11 is then closed by means of the gate 13.

A dose of icecream can for example be taken off by manually turning on the tap 15, this automatically causing an introduction of compressed air into the air chamber 18 and thus the advancement of the piston 20, which will stop at the same time as the tap 15 is turned off, or after a pre-set time by a timer device controlling the operation of the compressed air source 19.

The circuit controlling the operation of the compressed air surce 19 in relation to the demand for icecream is not here shown in detail, since it can be of any type well-known to persons with ordinary skill in the art.

Alternatively, the dispenser can be made to function in a wholly automated, coin-or counter-operated manner.

The dispenser embodied according to the invention will advantageously comprise a plurality of chambers 11, preferably featuring at least the hatch or gate 13 embodied in a transparent manner, i.e. made of transparent material, in which chambers there will be housed respective different flavoured cartridges of icecream 25.

It is thus possible to offer high-quality "hand-made" or Italian-style icecream through the intermediary of the sealed cartridges 25, which can be prepared in suitable production centres which supply them to different sales points.

In this way the sales or distribution points are relieved of the onus of preparing the icecream. inasmuch as all they require to have is the dispenser according to the invention and a refrigerator cabinet for the temporary storage of replacement icecream cartridges.

It will, lastly, be evident that the combination of the air chamber 18 and the flexible-material disposable cartridge 25 ensures that there is a correct dispensing of the dose of icecream without call for any special seals between the piston 20 and the chamber 11.

In addition, no foreign matter or agent comes into contact with the icecream contained in the container 22.

The object mentioned in the introductory part of this specification is consequently attained.

## Claims

Icecream dispenser of the type comprising at least a refrigerated chamber closed by a hatch or gate provided with a delivery tap, the said chamber being adapted to house in a removable manner an icecream cartridge containing a quantity of icecream on which act pressing means able to dispense a dose of icecream through the aperture of the said delivery tap, wherein the said pressing means comprise an air chamber housed within the said refrigerated chamber and featuring a piston-type wall adapted to act on the base of the said icecream cartridge, the said air chamber being connected to a compressed air source outside the refrigerated chamber, and wherein the said icecream cartridge comprises a container made of flexible material.

Fig.1

Fig.2